# EUROPÄISCHE PATENTSCHRIFT

(11) **EP 4 371 796 B1**
(45) Veröffentlichungstag und Bekanntmachung des Hinweises auf die Patenterteilung: **01.07.2026**
(21) Anmeldenummer: 22207763.8
(22) Anmeldetag: 16.11.2022
(51) Int. Cl.: B60K 1/04, H01M 10/04, H01M 50/20, H01M 50/244, B62D 21/15, B60K 1/00, B62D 25/02, B62D 25/20, H01M 10/613, H01M 10/6554, H01M 50/204, H01M 50/249, H01M 50/264, H01M 10/625

(54) **KRAFTFAHRZEUG MIT EINER HOCHVOLTBATTERIE**
MOTOR VEHICLE HAVING A HIGH-VOLTAGE BATTERY
VÉHICULE AUTOMOBILE DOTÉ D'UNE BATTERIE HAUTE TENSION

(43) Veröffentlichungstag der Anmeldung: 22.05.2024
(73) Patentinhaber: MAGNA STEYR Fahrzeugtechnik GmbH & Co KG, 8041 Graz (AT)
(72) Erfinder: ERLACHER, Manuel, 9545 Radenthein (AT); HOFER, Bernhard, 8053 Graz (AT); SCHWARZL, Werner, 8301 Laßnitzhöhe (AT); SATTELKOW, Bernadette, 8010 Graz (AT)
(74) Vertreter: Zangger, Bernd

(56) Entgegenhaltungen:
- DE-A1- 102020 131 112
- DE-B3- 102016 115 647
- US-A1- 2017 267 089

## Beschreibung

### Gebiet der Erfindung

Die vorliegende Erfindung betrifft ein Kraftfahrzeug mit einer Hochvoltbatterie und ein Verfahren zur Montage einer Hochvoltbatterie in ein Kraftfahrzeug.

### Stand der Technik

Es ist bekannt, dass geschlossene Hochvoltbatterien in Kraftfahrzeuge verbaut werden können, insbesondere als Antriebsbatterie zur Bereitstellung einer elektrischen Energie für den Antrieb des Kraftfahrzeugs. Die Batterie besitzt dann einen geschlossen Batteriekasten bzw. ein geschlossenes Batteriegehäuse, das die Zellmodule beherbergt. Eine solche Hochvoltbatterie wird mittels Schrauben am Fahrzeug befestigt. Dabei ist, außer an den Schraubstellen, üblicherweise ein Spalt zwischen der Batterie und der Fahrzeugstruktur von mindestens einigen Millimetern vorhanden, damit ein Scheuern im Betrieb (Geräusche, Korrosion...) vermieden wird, aber auch um eine kollisionsfreie Montage zu ermöglichen. Zur Wartung oder Reparatur muss die komplette Batterieeinheit vom Fahrzeug demontiert werden.

Üblicherweise weisen Batteriezellen in Einbaulage an ihrem oberen Ende elektrische Kontakte zur Abnahme der Spannung auf und an ihrem unteren Ende einen Zellenboden. Beispielsweise bei einem Unfall beschädigte Batteriezellen können dann über die elektrischen Kontakte, nach oben, in Richtung zum Fahrzeuginnenraum hin, ausgasen und dort Hitze entwickeln.

Aus der DE 10 2016 115647 B3 ist ein Batterieträger für ein Elektrokraftfahrzeug bekannt, welcher in einem Unterflurbereich eines Elektrokraftfahrzeuges montiert ist, wobei der Batterieträger eine Wanne mit einer Öffnung aufweist, wobei die Öffnung von einem Deckel geschlossen ist, wobei die Wanne in der Einbauposition im Elektrokraftfahrzeug mit ihrer Öffnung auf die Kraftfahrzeugvertikalrichtung nach unten zeigend angeordnet ist und wobei wenigstens eine Batterie in der Wanne durch Koppelung mit einem Boden der Wanne oder an in der Wanne angeordneten Montageträgern, derart in der Einbauposition des Batterieträgers angeordnet ist, dass die Batterie mit ihren elektrischen Polen nach unten zeigend hängend montiert ist.

### Zusammenfassung der Erfindung

Es ist eine Aufgabe der Erfindung, ein Kraftfahrzeug mit einer Hochvoltbatterie anzugeben, dass die oben beschriebenen Probleme vermeidet, geringen Bauraumbedarf hat und zu einer verbesserten Fahrzeugsicherheit beiträgt. Eine weitere Aufgabe ist es, ein einfaches und kostengünstiges Verfahren zur Montage der Hochvoltbatterie in einem solchen Kraftfahrzeug anzugeben.

Die Lösung der Aufgabe erfolgt durch ein Kraftfahrzeug mit einer Hochvoltbatterie mit den Merkmalen gemäß Anspruch 1.

Die Hochvoltbatterie umfasst einen die Hochvoltbatterie seitlich begrenzenden Rahmen, also Batterierahmen, wobei eine Vielzahl von Batteriezellen im Rahmen angeordnet sind, wobei ein Bodenblech des Kraftfahrzeugs den, den Rahmen an dessen Oberseite bedeckenden Deckel der Hochvoltbatterie bildet und die Batteriezellen "hängend" in dem Rahmen montiert sind, so dass die elektrischen Kontakte der Batteriezellen nach unten gerichtet sind und die Zellenböden nach oben gerichtet sind. Der Rahmen der Hochvoltbatterie ist erfindungsgemäß mit einer Dichtung zum Bodenblech hin abgedichtet.

Erfindungsgemäß wird ein Hochvoltspeicher mit hängenden Zellen in ein Kraftfahrzeug integriert. Die Zellen werden "umgedreht", das heißt, die Kontakte der Batteriezellen weisen nach unten - in Einbaulage im Kraftfahrzeug, somit zur Fahrbahn hin - und die Zellenböden sind oben an den Batteriezellen ausgebildet. Ein Ausgasen der Zellen erfolgt gegebenenfalls im Bereich der nun nach unten gerichteten Zellkontakte, also nach unten. Eine eventuelle Hitzeentwicklung ist nun in Richtung Unterfahrschutz/Fahrzeugaußenseite gerichtet und nicht wie sonst üblich, in Richtung zum Fahrzeuginneren.

Der Hochvoltspeicher weist im Gegensatz zu den herkömmlichen Bauweisen auch keinen eigenen Deckel auf, sondern dichtet mit dessen Rahmen direkt auf das Bodenblech des Kraftfahrzeugs ab, das bevorzugt flach ausgebildet ist. Ein wesentlicher Vorteil dieser Lösung ist der Bauraumzugewinn in Z-Richtung um den Luftspalt, der üblicherweise zwischen Batteriedeckel und Bodenblech eingehalten werden muss und hier entfällt. Weiters bedeutet ein Verzicht auf einen Batteriedeckel auch einen Kosten- und Gewichtsvorteil.

Weiterbildungen der Erfindung sind in den abhängigen Ansprüchen, der Beschreibung sowie den beigefügten Zeichnungen angegeben.

Vorzugsweise bildet ein Unterfahrschutzblech den, den Rahmen an dessen Unterseite bedeckenden Boden der Hochvoltbatterie. Die Zugänglichkeit zu den Batteriezellen kann von unten gewährleistet sein, über ein bevorzugt demontierbares Blech das gleichzeitig als Unterfahrschutz dient.

Vorzugsweise sind eine Vielzahl von Querträgern der Tragstruktur des Kraftfahrzeugs innerhalb des Rahmens der Hochvoltbatterie angeordnet. Bevorzugt sind die Querträger an den axialen Enden der Querträger mit dem Rahmen verschweißt. Die Querträger bilden somit bevorzugt eine verschweißte Struktur mit dem Batterierahmen.

Bevorzugt sind die Batteriezellen jeweils in den Zwischenräumen zwischen den Querträgern "hängend" an den Querträgern montiert, so dass mehrere parallele Reihen von Batteriezellen zwischen den Querträgern verlaufen.

Die Batteriezellen können einzeln in dem Rahmen montiert sein oder in Batteriezellenmodule zusammengefasst in dem Rahmen montiert sein. Die Hochvoltbatterie kann somit hängend montierte Batteriemodule aufweisen.

Vorzugsweise ist der Rahmen der Hochvoltbatterie mit einer demontierbaren Dichtung, insbesondere Montagedichtung, zum Bodenblech hin abgedichtet.

Bevorzugt ist mindestens ein flächiges Kühlelement, insbesondere zumindest eine Kühlplatte, und/oder mindestens ein flächiges Feuerschutzelement an der Oberseite der Batteriezellen, zwischen Batteriezellen und Bodenblech, angeordnet. Das oder die Kühlelemente und das oder die Feuerschutzelemente können über den Zellen eingelegt und fixiert sein.

Ein erfindungsgemäßes Verfahren zur Montage einer Hochvoltbatterie in ein Kraftfahrzeug, zur Herstellung eines Kraftfahrzeugs wie zuvor beschrieben, kann vorsehen, dass in einem Vormontageprozess zumindest ein flächiges Kühlelement, also eine Kühlplatte, bevorzugt von unten, in den Rahmen eingebaut wird, danach die Batteriezellen im Rahmen montiert werden, danach das Unterfahrschutzblech von unten am Rahmen montiert wird. Die Querträger können ebenfalls vor dem Unterfahrschutzblech, nach, oder bevorzugt vor der Montage der Kühlplatte, im Rahmen montiert werden.

Die Querträger können auch einen Bestandteil der Batterierahmenstruktur bilden. Rahmen und Querträger können somit eine vormontierte Einheit bilden.

Möglich ist auch, dass die Querträger und die Kühlplatte oder Kühlplatten eine vormontierte Einheit bilden. Diese Komponenten, die vormontierte Einheit, kann zugleich in den Rahmen gehoben und/oder am Rahmen montiert werden, mit oder ohne Batteriezellen/-modulen.

Die Vormontage des Batteriegehäuses erfolgt im ausgebauten Zustand und das Gehäuse, der Rahmen, ist von beiden Seiten zugänglich. Als Erstes wird bevorzugt die Kühlplatte von unten eingebaut und fixiert. Danach folgen die Batteriezellen, welche dann elektrisch miteinander verbunden werden können. Als Letztes kommt die Schließplatte von unten, welche gleichzeitig als Unterfahrschutz ausgeführt ist.

Die vormontierte Batterie kann mit einer Schutzabdeckung bestückt an ein Montageband gebracht werden, und von unten mittels üblicher Manipulationsvorrichtungen in das Fahrzeug eingebaut werden.

Die vormontierte Hochvoltbatterie kann von unten in einer übrigen Tragstruktur des Kraftfahrzeugs montiert werden, bevorzugt an seitlichen Schwellern des Kraftfahrzeugs befestigt werden, zum Beispiel verschraubt werden.

### Kurzbeschreibung der Zeichnungen

Die Erfindung wird im Folgenden beispielhaft unter Bezugnahme auf die Zeichnungen beschrieben.
- Fig. 1: ist eine dreidimensionale schematische Darstellung einer Hochvoltbatterie in einem Rahmen eines erfindungsgemäßen Kraftfahrzeugs und zeigt die Lage der Schnitte X-X und Y-Y.
- Fig. 2: ist eine Schnittansicht eines Teilbereichs eines nicht erfindungsgemäßen Kraftfahrzeugs gemäß Schnitt X-X der Fig. 1.
- Fig. 3: ist eine Schnittansicht eines Teilbereichs eines erfindungsgemäßen Kraftfahrzeugs in einer ersten Ausführungsvariante gemäß Schnitt X-X der Fig. 1.
- Fig. 4: ist eine Schnittansicht eines Teilbereichs eines erfindungsgemäßen Kraftfahrzeugs in der ersten Ausführungsvariante gemäß Schnitt Y-Y der Fig. 1.
- Fig. 5: ist eine Schnittansicht eines Teilbereichs eines erfindungsgemäßen Kraftfahrzeugs in einer zweiten Ausführungsvariante gemäß Schnitt X-X der Fig. 1.
- Fig. 6: ist eine Schnittansicht eines Teilbereichs eines erfindungsgemäßen Kraftfahrzeugs in der zweiten Ausführungsvariante gemäß Schnitt Y-Y der Fig. 1.

### Detaillierte Beschreibung der Erfindung

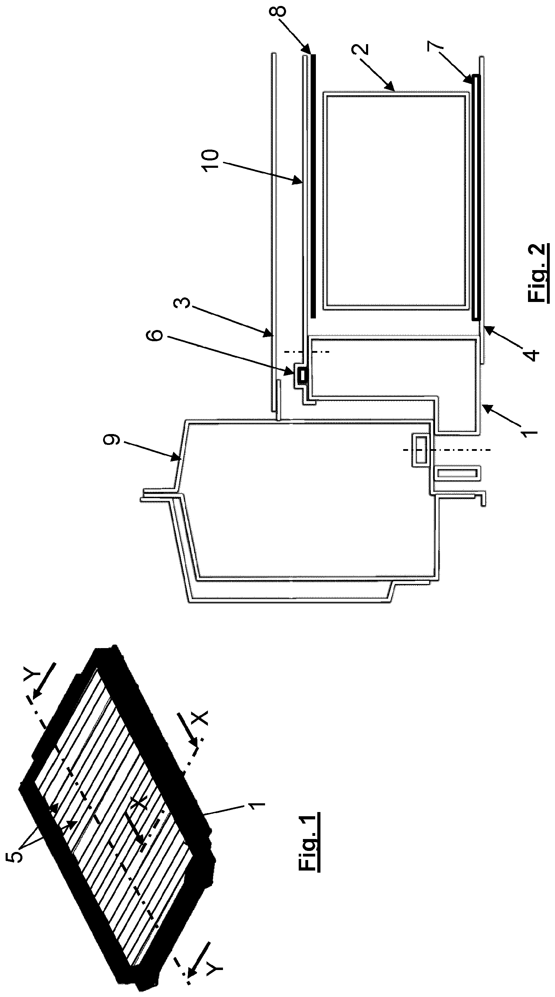

Fig. 1 ist eine schematische Darstellung einer Hochvoltbatterie in einem Rahmen eines Kraftfahrzeugs und zeigt die Lage der Schnitte X-X und Y-Y, die in den folgenden Figuren 2 bis 6 verwendet werden.

Fig. 2 stellt ein nicht erfindungsgemäßes Kraftfahrzeug dar. Das Kraftfahrzeug umfasst eine Hochvoltbatterie, die Batteriezellen 2 umfasst, die in einem Rahmen 1 angeordnet sind, der die Hochvoltbatterie seitlich begrenzt. Die Hochvoltbatterie wird dabei oben von einem Batteriedeckel 10 begrenzt. Zwischen dem Batteriedeckel 10 und einem Bodenblech 3 des Kraftfahrzeuges befindet sich ein Luftspalt. Der Batteriedeckel 10 ist über eine Dichtung 6 zu dem Rahmen 1 hin abgedichtet. An der Unterseite der Hochvoltbatterie bildet ein Unterfahrschutzblech 4 den Boden der Hochvoltbatterie. Der Batteriedeckel 10 und das Unterfahrschutzblech 4 bedecken daher den Rahmen 1, um zusammen das Gehäuse der Hochvoltbatterie zu bilden.

Die Batteriezellen 2 sind in üblicher Weise "stehend" im Gehäuse angeordnet, so dass elektrische Kontakte der Batteriezellen 2 oben an den Batteriezellen 2 angeordnet sind. An der Oberseite der Hochvoltbatterie ist daher, zwischen Batteriezellen 2 und Batteriedeckel 10 ein Feuerschutzelement 8 angeordnet. Ein Kühlelement 7 ist an der Unterseite der Hochvoltbatterie, zwischen Batteriezellen 2 und Unterfahrschutzblech 4, angeordnet. Die Hochvoltbatterie ist seitlich an einem Schweller 9 befestigt.

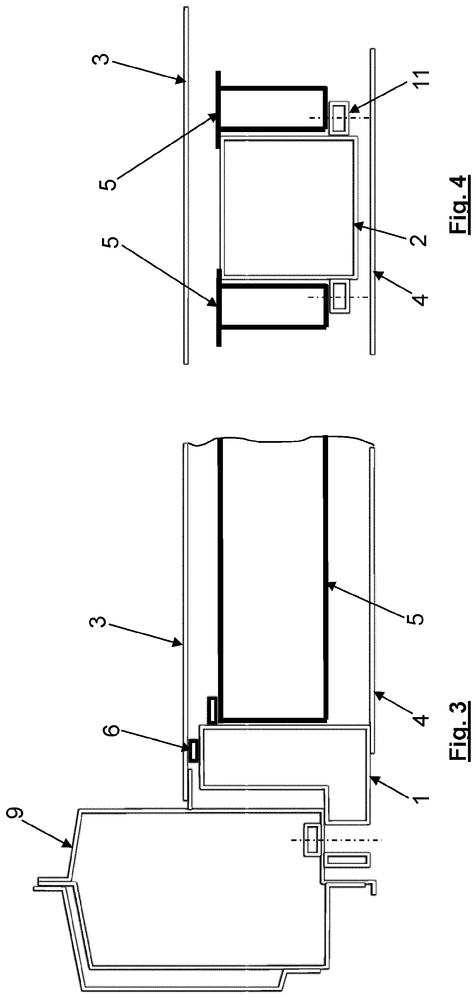

Ein erfindungsgemäßes Kraftfahrzeug ist in Fig. 3 und Fig. 4 dargestellt.

Dabei bildet ein Bodenblech 3 des Kraftfahrzeugs den Batteriedeckel der Hochvoltbatterie und somit einen den Rahmen 1 an dessen Oberseite bedeckenden Deckel der Hochvoltbatterie. Die Batteriezellen 2 sind "hängend" in dem Rahmen 1 montiert, so dass die elektrischen Kontakte der Batteriezellen 2 nach unten gerichtet sind und die Zellenböden nach oben gerichtet sind.

Ein Unterfahrschutzblech 4 bildet den, den Rahmen 1 an dessen Unterseite bedeckenden Boden der Hochvoltbatterie.

Wie dies auch in der Fig. 1 dargestellt ist, sind in der Ausführung nach Fig. 3 und Fig. 4 eine Vielzahl von Querträgern 5 der Tragstruktur des Kraftfahrzeugs innerhalb des Rahmens 1 der Hochvoltbatterie parallel zueinander angeordnet. Die Querträger 5 sind an den Enden der Querträger 5 mit dem Rahmen 1 verschweißt.

Die Batteriezellen 2 sind jeweils in den Zwischenräumen zwischen den Querträgern 5 "hängend" an den Querträgern 5 montiert, so dass mehrere parallele Reihen von Batteriezellen 2 zwischen den Querträgern 5 verlaufen.

Der Rahmen 1 der Hochvoltbatterie ist mit einer demontierbaren Dichtung 6, nämlich einer Montagedichtung, zum Bodenblech 3 hin abgedichtet.

Im Bereich der unteren Enden der Batteriezellen 2 sind diese, von unten, mittels einer Verschraubung 11 mit den Querträgern 5 verschraubt, bevorzugt mit den Unterseiten der Querträger 5 verschraubt.

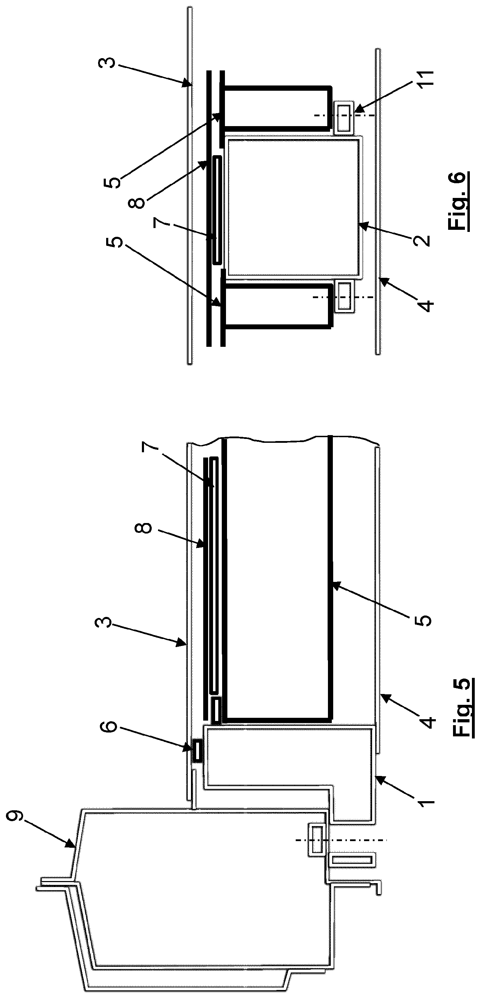

Wie in der Ausführungsform des Kraftfahrzeugs nach den Fig. 5 und Fig. 6 dargestellt, kann mindestens ein flächiges Kühlelement 7, insbesondere eine Kühlplatte, und/oder mindestens ein flächiges Feuerschutzelement 8 jeweils an der Oberseite der Batteriezellen 2, zwischen Batteriezellen 2 und Bodenblech 3 angeordnet sein.

### Bezugszeichenliste

- 1: Rahmen
- 2: Batteriezellen
- 3: Bodenblech
- 4: Unterfahrschutzblech
- 5: Querträger
- 6: Dichtung
- 7: Kühlelement
- 8: Feuerschutzelement
- 9: Schweller
- 10: Batteriedeckel
- 11: Verschraubung

## Patentansprüche

1. Kraftfahrzeug mit einer Hochvoltbatterie, wobei die Hochvoltbatterie einen die Hochvoltbatterie seitlich begrenzenden Rahmen (1) umfasst, wobei eine Vielzahl von Batteriezellen (2) im Rahmen (1) angeordnet sind, wobei die Batteriezellen (2) "hängend" in dem Rahmen (1) montiert sind, so dass die elektrischen Kontakte der Batteriezellen (2) nach unten gerichtet sind und die Zellenböden nach oben gerichtet sind,
**dadurch gekennzeichnet , dass** ein Bodenblech (3) des Kraftfahrzeugs den, den Rahmen (1) an dessen Oberseite bedeckenden Deckel der Hochvoltbatterie bildet, wobei der Rahmen (1) der Hochvoltbatterie mit einer demontierbaren Dichtung (6) zum Bodenblech (3) hin abgedichtet ist.

2. Kraftfahrzeug nach Anspruch 1,
wobei ein Unterfahrschutzblech (4) den, den Rahmen (1) an dessen Unterseite bedeckenden Boden der Hochvoltbatterie bildet.

3. Kraftfahrzeug nach zumindest einem der vorhergehenden Ansprüche,
wobei eine Vielzahl von Querträgern (5) der Tragstruktur des Kraftfahrzeugs innerhalb des Rahmens (1) der Hochvoltbatterie angeordnet sind, bevorzugt an den Enden der Querträger (5) mit dem Rahmen (1) verschweißt.

4. Kraftfahrzeug nach Anspruch 3,
wobei die Batteriezellen (2) jeweils in den Zwischenräumen zwischen den Querträgern (5) "hängend" an den Querträgern (5) montiert sind, so dass mehrere parallele Reihen von Batteriezellen (2) zwischen den Querträgern (5) verlaufen.

5. Kraftfahrzeug nach zumindest einem der vorhergehenden Ansprüche,
wobei die Batteriezellen (2) einzeln in dem Rahmen (1) montiert sind oder dass die Batteriezellen (2) in Batteriezellenmodule zusammengefasst in dem Rahmen (1) montiert sind.

6. Kraftfahrzeug nach zumindest einem der vorhergehenden Ansprüche,
wobei die demontierbare Dichtung (6) eine Montagedichtung ist.

7. Kraftfahrzeug nach zumindest einem der vorhergehenden Ansprüche,
wobei mindestens ein flächiges Kühlelement (7) und/oder mindestens ein flächiges Feuerschutzelement (8) an der Oberseite der Batteriezellen (2), zwischen Batteriezellen (2) und Bodenblech (3) angeordnet ist.

8. Verfahren zur Montage einer Hochvoltbatterie in ein Kraftfahrzeug nach zumindest einem der vorhergehenden Ansprüche,
**dadurch gekennzeichnet , dass** in einem Vormontageprozess zumindest ein flächiges Kühlelement (7), bevorzugt von unten, in den Rahmen eingebaut wird, danach die Batteriezellen (2) im Rahmen montiert werden, danach das Unterfahrschutzblech (4) von unten am Rahmen montiert wird.

9. Verfahren nach Anspruch 8,
wobei die nach Anspruch 8 vormontierte Hochvoltbatterie von unten in einer übrigen Tragstruktur des Kraftfahrzeugs montiert wird, bevorzugt an seitlichen Schwellern (9) des Kraftfahrzeugs befestigt.

## Claims

1. Motor vehicle having a high-voltage battery, wherein the high-voltage battery comprises a frame (1), which delimits the high-voltage battery laterally, wherein a plurality of battery cells (2) are arranged in the frame (1), wherein the battery cells (2) are mounted in the frame (1) in a "suspended" manner so that the electrical contacts of the battery cells (2) are directed downwards and the cell bases are directed upwards, **characterized in that** a floor panel (3) of the motor vehicle forms the cover of the high-voltage battery, which covers the frame (1) at its top side, wherein the frame (1) of the high-voltage battery is sealed towards the floor panel (3) by a removeable seal (6).

2. Motor vehicle according to Claim 1,
wherein an underride guard plate (4) forms the base of the high-voltage battery, which covers the frame (1) at its bottom side.

3. Motor vehicle according to at least one of the preceding claims,
wherein a plurality of crossmembers (5) of the supporting structure of the motor vehicle are arranged within the frame (1) of the high-voltage battery, preferably welded to the frame (1) at the ends of the crossmembers (5).

4. Motor vehicle according to Claim 3,
wherein the battery cells (2) are each mounted on the crossmembers (5) such that they are "suspended" in the clearances between the crossmembers (5), so that multiple parallel rows of battery cells (2) extend between the crossmembers (5).

5. Motor vehicle according to at least one of the preceding claims,
wherein the battery cells (2) are mounted individually in the frame (1) or in that the battery cells (2) are mounted in the frame (1) in groups to form battery cell modules.

6. Motor vehicle according to at least one of the preceding claims,
wherein the removable seal (6) is a mounting seal.

7. Motor vehicle according to at least one of the preceding claims,
wherein at least one flat cooling element (7) and/or at least one flat fire protection element (8) is arranged at the top side of the battery cells (2), between battery cells (2) and floor panel (3).

8. Method for mounting a high-voltage battery in a motor vehicle according to at least one of the preceding claims,
**characterized in that**, in a pre-mounting process, at least one flat cooling element (7) is installed in the frame, preferably from below, then the battery cells (2) are mounted in the frame, then the underride guard plate (4) is mounted on the frame from below.

9. Method according to Claim 8,
wherein the high-voltage battery which is pre-mounted according to claim 8 is mounted in a remaining supporting structure of the motor vehicle from below, preferably fastened on side sills (9) of the motor vehicle.

## Revendications

1. Véhicule automobile doté d'une batterie haute tension, la batterie haute tension comprenant un cadre (1) délimitant latéralement la batterie haute tension, une pluralité d'éléments de batterie (2) étant disposés dans le cadre (1), les éléments de batterie (2) étant montés « en suspension » dans le cadre (1), de telle sorte que les contacts électriques des éléments de batterie (2) sont dirigés vers le bas et les fonds d'élément sont dirigés vers le haut, **caractérisé en ce qu'**une tôle de plancher (3) du véhicule automobile forme le couvercle de la batterie haute tension, recouvrant le cadre (1) sur son côté supérieur, le cadre (1) de la batterie haute tension étant rendu étanche par rapport à la tôle de plancher (3) avec un joint d'étanchéité (6) démontable.

2. Véhicule automobile selon la revendication 1,
une tôle anti-encastrement (4) formant le fond de la batterie haute tension recouvrant le cadre (1) sur son côté inférieur.

3. Véhicule automobile selon au moins l'une des revendications précédentes,
une pluralité de traverses (5) de la structure porteuse du véhicule automobile étant disposées à l'intérieur du cadre (1) de la batterie haute tension, de manière préférée de manière soudée au cadre (1) sur les extrémités des traverses (5).

4. Véhicule automobile selon la revendication 3,
les éléments de batterie (2) étant chacun montés « en suspension » sur les traverses (5) dans les espaces intermédiaires entre les traverses (5), de telle sorte que plusieurs de rangées parallèles d'éléments de batterie (2) s'étendent entre les traverses (5).

5. Véhicule automobile selon au moins l'une des revendications précédentes,
les éléments de batterie (2) étant montés individuellement dans le cadre (1) ou les éléments de batterie (2) étant montés dans le cadre (1) de manière assemblée en des modules d'éléments de batterie.

6. Véhicule automobile selon au moins l'une des revendications précédentes,
le joint d'étanchéité (6) démontable étant un joint d'étanchéité de montage.

7. Véhicule automobile selon au moins l'une des revendications précédentes,
au moins un élément de refroidissement plat (7) et/ou au moins un élément coupe-feu plat (8) étant disposés sur le côté supérieur des éléments de batterie (2), entre des éléments de batterie (2) et la tôle de plancher (3).

8. Procédé de montage d'une batterie haute tension dans un véhicule automobile selon au moins l'une des revendications précédentes,
**caractérisé en ce que**, dans un processus de prémontage, au moins un élément de refroidissement plat (7) est installé dans le cadre, de manière préférée par le bas, puis les éléments de batterie (2) sont montés dans le cadre, puis la tôle anti-encastrement (4) est montée sur le cadre depuis le bas.

9. Procédé selon la revendication 8,
la batterie haute tension prémontée selon la revendication 8 étant montée depuis le bas dans une structure porteuse restante du véhicule automobile, de manière préférée de manière fixée sur des seuils latéraux (9) du véhicule automobile.
